# EUROPEAN PATENT APPLICATION

(11) **EP 3 330 137 A1**
(43) Date of publication of application: **06.06.2018**
(21) Application number: 16830534.0
(22) Date of filing: 26.07.2016
(51) Int. Cl.: B60S 1/38, B60S 1/40

(54) **WIPER ASSEMBLY AND JOINT MEMBER FOR WIPER ASSEMBLY**

(30) Priority: 27.07.2015 JP 2015148169
(71) Applicant: Nippon Wiper Blade Co., Ltd., Kazo-shi, Saitama 347-8585 (JP)
(72) Inventor: SHIMIZU Yuta, Kazo-shi Saitama 347-8585 (JP); AOKI Yoshiaki, Kazo-shi Saitama 347-8585 (JP)
(74) Representative: Barker Brettell LLP
(86) International application number: PCT/JP2016/071938
(87) International publication number: WO 2017/018429

(57) **Abstract**

There is provided a wiper assembly that includes a wiper blade and a wiper arm, and a connecting member for a wiper assembly, the wiper assembly and the connecting member being configured so that the appearance of the wiper assembly can be improved, and the work of connecting the wiper blade and the wiper arm can be facilitated. In a wiper assembly 1, a clip housing 28 is included in a blade housing section 27 of a wiper arm 2, and a wiper blade 3 and the wiper arm 2 are joined in a state where a clip member 4 is housed within the clip housing 28. Retention sections 29 are provided at lower edges 26A of side walls 26 on both sides of the wiper arm 2, and the clip member 4 is retained by fitting the retention sections 29 into cutout parts 44 of the clip member 4.

## Description

### [Technical Field]

The present invention relates to a wiper assembly that includes a wiper blade and a wiper arm. The present invention also relates to a connecting member of the wiper assembly for connecting the wiper blade with the wiper arm.

### [Background Art]

In a wiper assembly, a blade housing section is included in a wiper arm, and a wiper blade is retained by the wiper arm in the state where at least a part of the wiper blade is housed within this blade housing section. Conventionally, in such a wiper assembly, the wiper blade is rotatably connected via a connection pin such as a rivet, with respect to the wiper arm.

### [Citation List]

### [Patent Literature]

Patent Literature 1: Japanese Laid-Open Patent Application No. 2006-76523

### [Summary of Invention]

### [Technical Problem]

In the case where such a connection of the wiper blade and the wiper arm is performed by a connection pin such as a rivet, the connection pin is exposed on the outside of the wiper arm, and therefore the appearance of the wiper assembly will be spoiled. Moreover, the work of connecting by a connection pin requires time and effort, and therefore the assembly of the wiper assembly is complicated.

In view of the foregoing, it is an object of the present invention to provide a wiper assembly that includes a wiper blade and a wiper arm, and a connecting member for a wiper assembly, the wiper assembly and the connecting member being configured so that the appearance of the wiper assembly can be improved, and the work of connecting the wiper blade and the wiper arm can be facilitated.

### [Solution to Problem]

The present invention provides a wiper assembly comprising: a wiper blade including a wiping section adapted to wipe a surface to be wiped; a wiper arm including a blade housing section adapted to house at least a part of the wiper blade; and a connecting member adapted to connect the wiper blade with the wiper arm in a state where the connecting member is housed within the blade housing section.

The wiper arm may include a top wall, and side walls on both sides of the top wall, the blade housing section may be formed from the top wall and both of the side walls, and each of the side walls may include an edge positioned opposite to the top wall, and a retention section adapted to retain the connecting member and disposed at the edge of the side wall.

The connecting member may include fitting parts into which the retention sections are to be fitted and deflecting parts disposed adjacent to the fitting parts, and the retention sections may be adapted to be introduced into the fitting parts as the deflecting parts are deflected by contact with the retention sections.

The present invention also provides a connecting member for a wiper assembly comprising a wiper blade including a wiping section adapted to wipe a surface to be wiped and a wiper arm including a blade housing section adapted to house at least a part of the wiper blade, the connecting member adapted to connect the wiper blade with the wiper arm, wherein the wiper blade and the wiper arm are connected in a state where the connecting member is housed within the blade housing section.

### [Advantageous Effects of Invention]

According to the present invention, in the wiper assembly (for example, wiper assembly 1 or 11) including the blade housing section (for example, blade housing section 27) adapted to house the wiper blade (for example, wiper blade 3), the connecting member (for example, clip member 4 or 14) is adapted to connect the wiper blade with the wiper arm in a state where the connecting member is housed within the blade housing section. Therefore, any part of the connecting member is not exposed on the outside surface of the wiper arm. Thus, the beauty of the appearance of the wiper assembly can be improved.

Moreover, the retention sections (for example, retention sections 29) are provided at the edges (for example, lower edges 26A), positioned opposite to the top wall (for example, top wall 25), of the side walls (for example, side walls 26) of the wiper arm, and the connecting member is retained by the retention sections. The connecting member can thus be attached to the wiper arm by simply being fitting it into the blade housing section of the wiper arm. Therefore, the work of assembling the wiper assembly can be easily performed.

Moreover, the connecting member includes the fitting parts (for example, cutout parts 54) into which the retention sections are fitted and the deflecting parts (for example, arm parts 55) provided adjacent to the fitting parts. The retention sections are introduced into the fitting parts, as the deflecting parts are deflected by contact with the retention sections. The installation of the connecting member can thus be carried out by sliding it with respect to the wiper arm. Therefore, the work of mounting the connecting member to the wiper arm can be easily performed. In addition, an assembly of the wiper arm can be carried out in a state where the connecting member is mounted on the wiper blade. Therefore, the assembly of the wiper assembly can be effectively performed.

### [Brief Description of Drawings]

[Figure 1] Figure 1 is a perspective view showing a wiper assembly in a first embodiment of the present invention.
[Figure 2] Figure 2 is an exploded perspective view showing the wiper assembly of the same embodiment.
[Figure 3] Figure 3 is a front view showing the wiper assembly of the same embodiment.
[Figure 4] Figure 4 is a plan view showing the wiper assembly of the same embodiment.
[Figure 5] Figure 5 is a bottom view showing the wiper assembly of the same embodiment.
[Figure 6] Figure 6 is a front view showing a wiper blade of the same embodiment.
[Figure 7] Figure 7 is a plan view showing the wiper blade of the same embodiment.
[Figure 8] Figure 8 is a bottom view showing the wiper blade of the same embodiment.
[Figure 9] Figure 9 is a perspective view showing a clip member of the same embodiment.
[Figure 10] Figure 10 is a front view showing the clip member of the same embodiment.
[Figure 11] Figure 11 is a side view showing the clip member of the same embodiment.
[Figure 12] Figure 12 is a plan view showing the clip member of the same embodiment.
[Figure 13] Figure 13 is a bottom view showing the clip member of the same embodiment.
[Figure 14] Figure 14 is a perspective view showing a part of the wiper assembly of the same embodiment, and shows a state prior to the clip member being mounted on a clip mounting section of a wiper arm.
[Figure 15] Figure 15 is a perspective view showing a part of the wiper assembly of the same embodiment, and shows a state where the clip member is inserted into a position adjacent to the clip mounting section of the wiper arm.
[Figure 16] Figure 16 is a perspective view showing a part of the wiper assembly of the same embodiment, and shows a state where the clip member has been mounted on the clip mounting section of the wiper arm.
[Figure 17] Figure 17 is an exploded perspective view showing an entire configuration of a wiper assembly in a second embodiment of the present invention.
[Figure 18] Figure 18 is an exploded perspective view showing an entire configuration of the wiper assembly of the same embodiment, and shows a state where the clip member has been attached to the wiper blade.
[Figure 19] Figure 19 is a front view showing an entire configuration of the wiper assembly of the same embodiment, and shows a state where the clip member has been attached to the wiper blade.
[Figure 20] Figure 20 is a perspective view showing the clip member of the same embodiment.
[Figure 21] Figure 21 is a front view showing the clip member of the same embodiment.
[Figure 22] Figure 22 is a side view showing the clip member of the same embodiment.
[Figure 23] Figure 23 is a plan view showing the clip member of the same embodiment.
[Figure 24] Figure 24 is a perspective view showing the wiper assembly of the same embodiment, and shows a state while attaching the wiper blade and a connecting member to the wiper arm.
[Figure 25] Figure 25 is a perspective view showing the wiper assembly of the same embodiment, and shows a state where the wiper blade and the connecting member have been attached to the wiper arm.

### [Description of Embodiments]

Hereinafter, embodiments of the present invention will be described on the basis of the attached drawings.

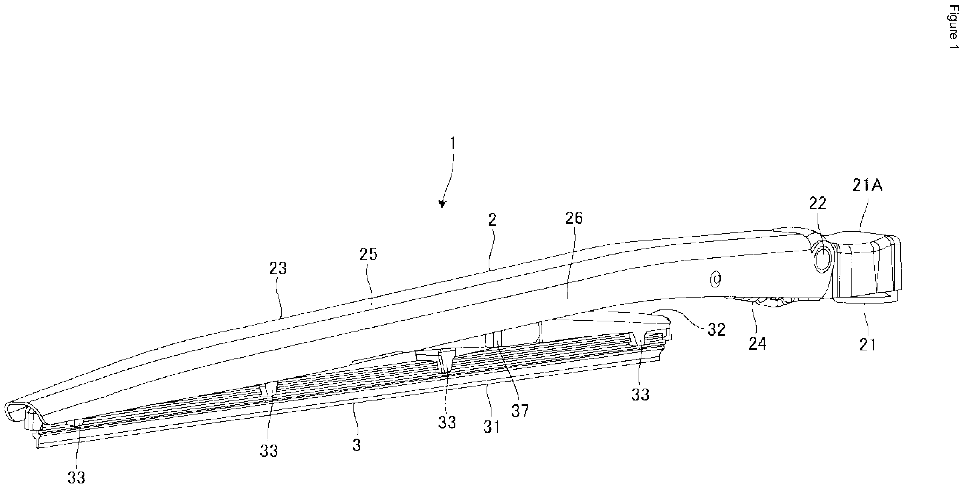

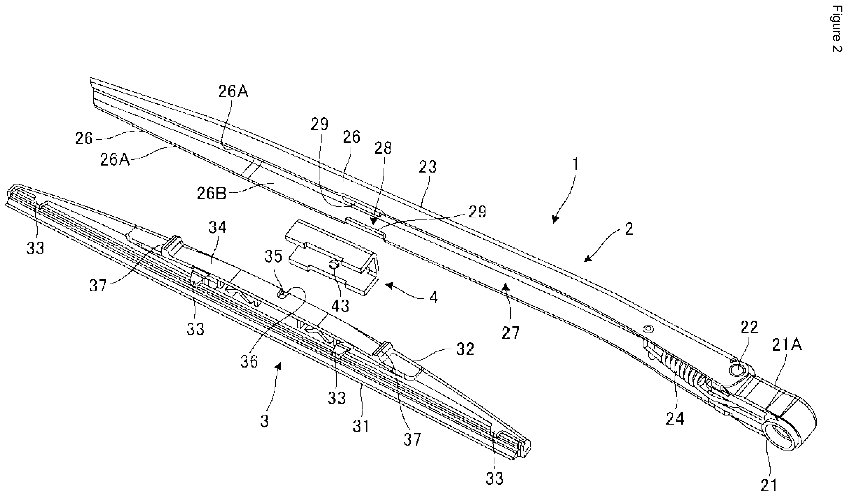

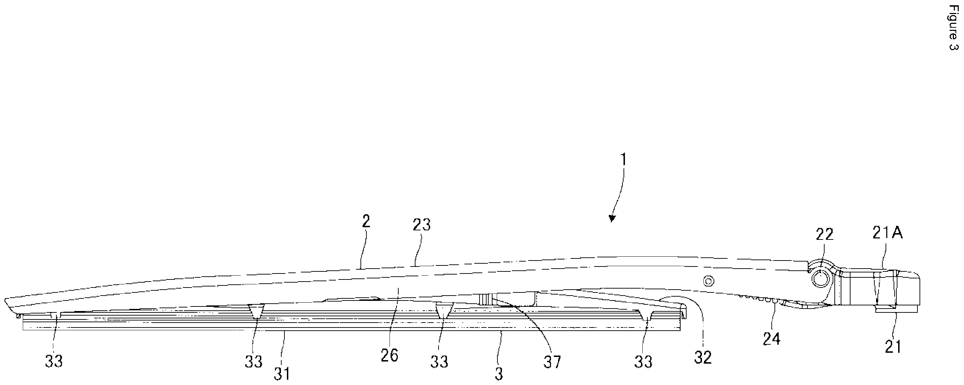

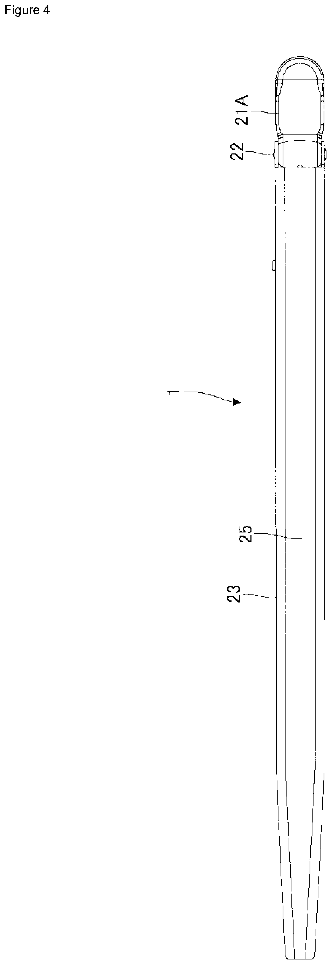

Figure 1 to Figure 5 show an entire configuration of a wiper assembly 1 in an embodiment of the present invention. As illustrated, the wiper assembly 1 includes a wiper arm 2, and a wiper blade 3 retained by the wiper arm 2.

The wiper arm 2 includes an arm head 21 on the base end side, and an arm main body 23 rotatably connected via a connection pin 22 with respect to the arm head 21. Note that, the arm head 21 is covered by a head cover 21A. Moreover, while the arm head 21, the connection pin 22, and the arm main body 23 are all formed from metal in the present embodiment, in order to increase the mechanical strength of the wiper assembly 1, it is possible to form these members from a non-metallic material (for example, resin).

A spring 24 is provided between the arm head 21 and the arm main body 23. In this way, the spring 24 provides an appropriate force with respect to the rotation of the arm main body 23 around the connection pin 22, at the time when using the wiper assembly 1. As a result of this, the wiper blade 3 supported by the arm main body 23 is pressed by an appropriate pressing force to a surface to be wiped (for example, a glass surface of a vehicle).

The arm main body 23 is an elongated member that constitutes a main member of the wiper arm 2, and is constituted of a top wall 25, and side walls 26 on both sides of the top wall 25 that extend downward from both sides of the long direction. Moreover, a space enclosed by the top wall 25 and both of the side walls 26 becomes a blade housing section 27 that houses a support section 32 of the wiper blade 3.

A clip mounting section 28, on which a clip member 4 is mounted, is provided at an approximately central part of the long direction of the blade housing section 27. A pair of retention sections 29 for retaining the mounted clip member 4 are provided on the clip mounting section 28. The retention sections 29 respectively extend at right angles with respect to the side walls 26, from lower edges 26A of each of the side walls 26 toward the side wall 26 on the opposite side.

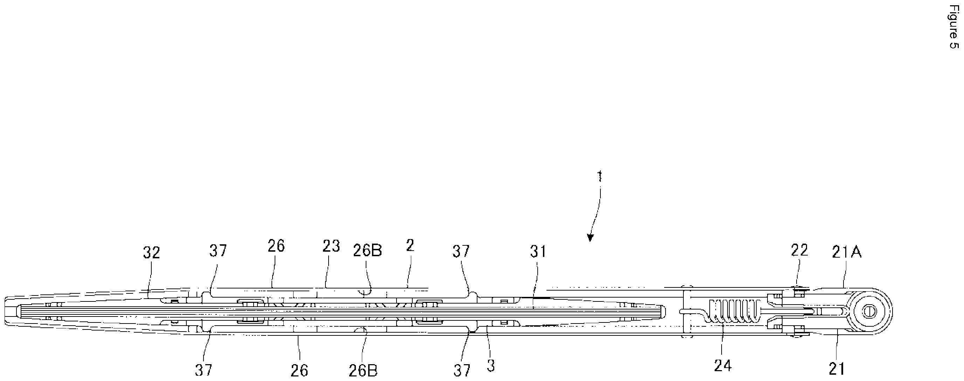

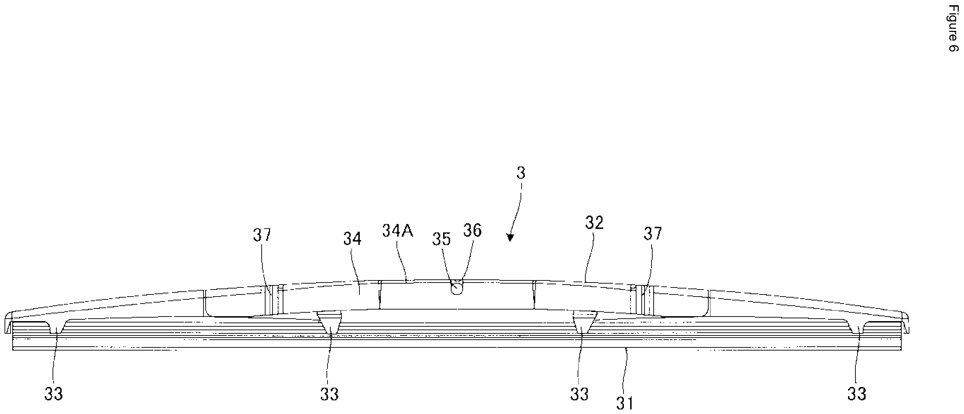

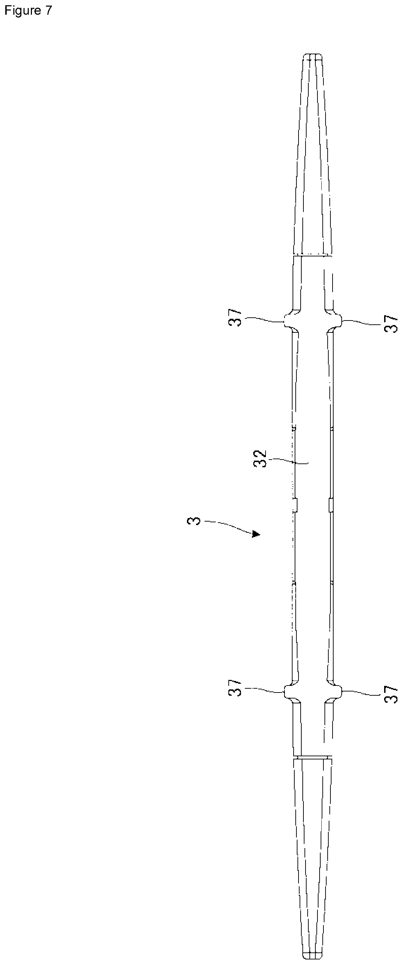

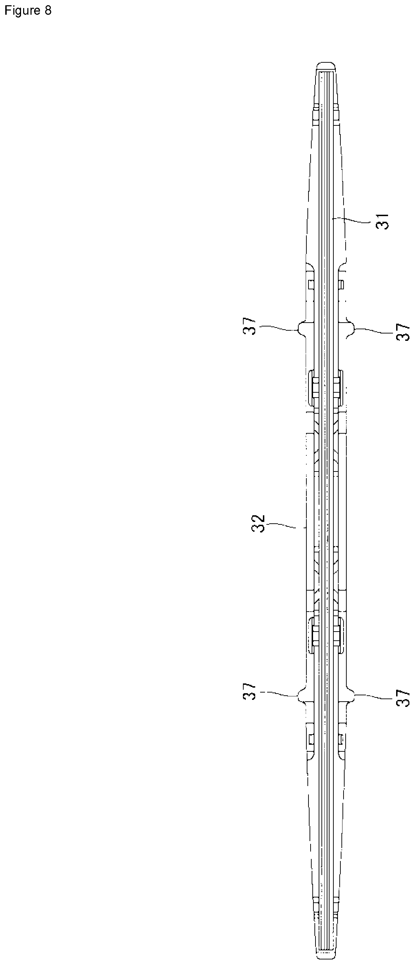

As shown in Figure 5 to Figure 8, the wiper blade 3 includes a blade section 31, and the support section 32 that supports the blade section 31 from above. The blade section 31 is an elongated wiping member for wiping a surface to be wiped, and is formed from rubber.

The support section 32 is an elongated member that has a length approximately the same as that of the blade section 31. A plurality of claw parts 33 that extend facing downward are provided at necessary positions of the support section 32, and the blade section 31 is supported by these claw parts 33. Note that, while the support section 32 is entirely formed from resin in the present embodiment to reduce the weight and lower the cost of the wiper assembly 1, the support section 32 may be formed from a material other than resin (for example, metal).

Connection recesses 35 are respectively formed at approximately central parts of the long direction on both side surfaces 34 of the support section 32. Each of the connection recesses 35 is formed near the upper edge 34A of each of the side surfaces 34, and introduction grooves 36 are respectively formed between the upper edges 34A of each of the connection recesses 35. In this way, at the time when the wiper blade 3 is attached with respect to the clip member 4, connection protrusions 43 of the clip member 4 will be guided into the connection recesses 35 through these introduction grooves 36.

Moreover, a plurality of projections 37 are formed on the side walls 34 on both sides of the support section 32. In the present embodiment, a total of 4 projections 37 are provided, one each on both sides of the long direction of each of the connection recesses 35. In this way, at the time when the wiper blade 3 is mounted on the arm main body 2, these projections 37 will come into contact with inward-facing surfaces 26B (surfaces facing the blade housing section 27 side) of both of the side walls 26 of the arm main body 2, and as a result, the support section 32 of the wiper blade 3 will be stably retained at an appropriate position within the blade housing section 27 of the arm main body 2. Therefore, the structural strength of the wiper assembly 1 can be improved.

On the other hand, since the contact portions of the wiper blade 3 and the wiper arm 2 are the projections 37, the contact area between the wiper blade 3 and the wiper arm 2 can be reduced. Therefore, since frictional resistance at the time of rotating the wiper blade 3 can be reduced, an appropriate rotation operation of the wiper blade 3 will not be obstructed, at the time when using the wiper assembly 1.

The projections 37 are provided at positions separated the farthest in the long direction from the connection recesses 35, in a range where continuously in contact with the inward-facing surfaces 26B of the side walls 26 of the arm main body 23 at the time when the wiper blade 3 rotates with respect to the wiper arm 2. In this way, in the case where an external force is applied in a horizontal direction with respect to the wiper blade 3, this external force will be received at the projections 37 at positions sufficiently separated from the connection recesses 35 that are support points. Therefore, the load applied to the support section 32 can be reduced, and damage to the support section 32 can be appropriately prevented.

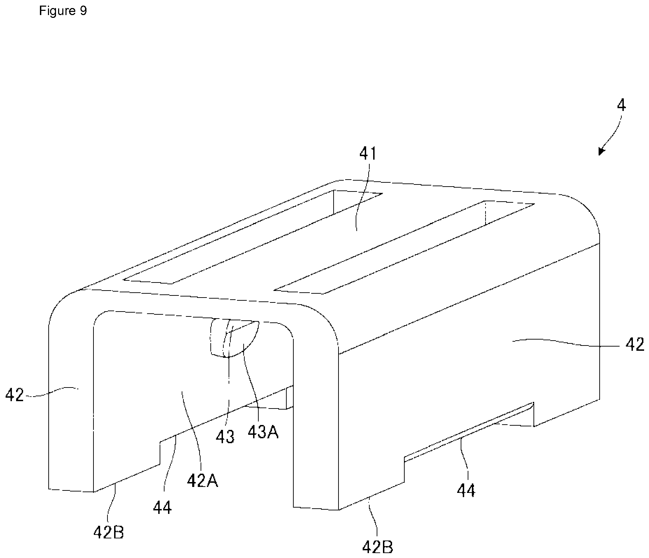

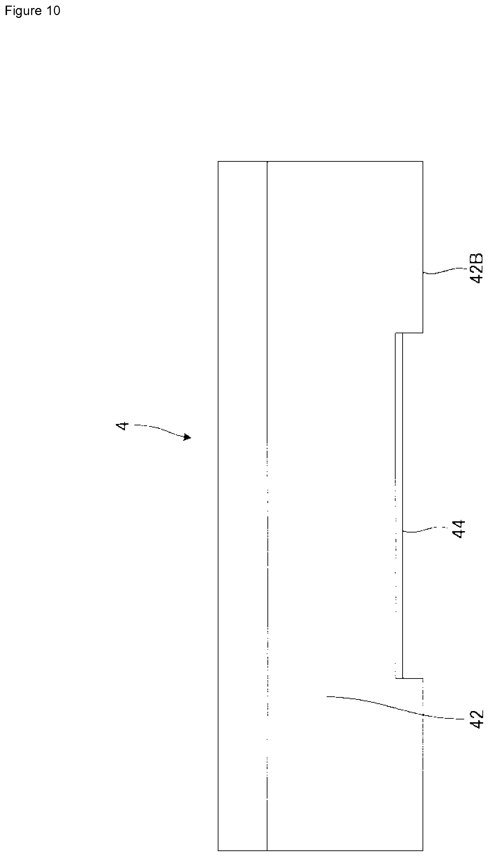

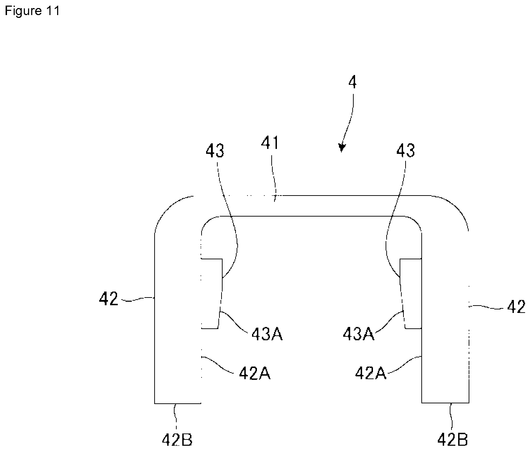

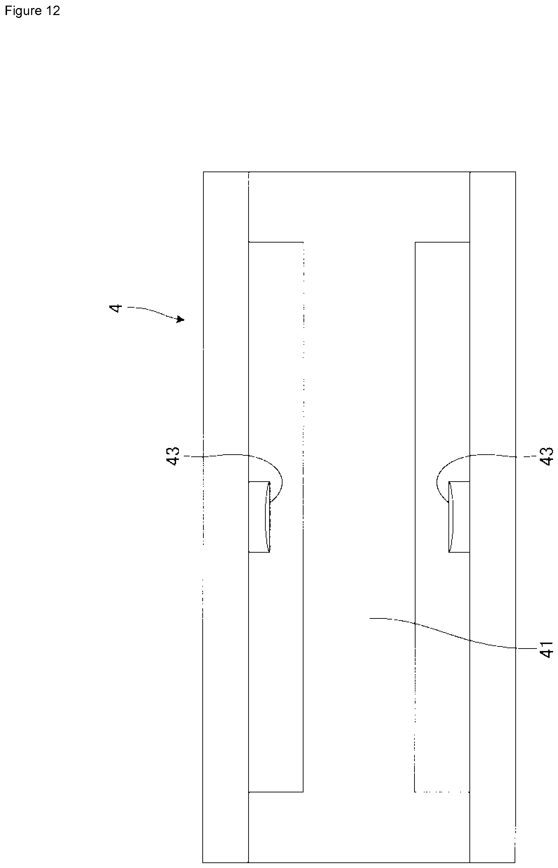

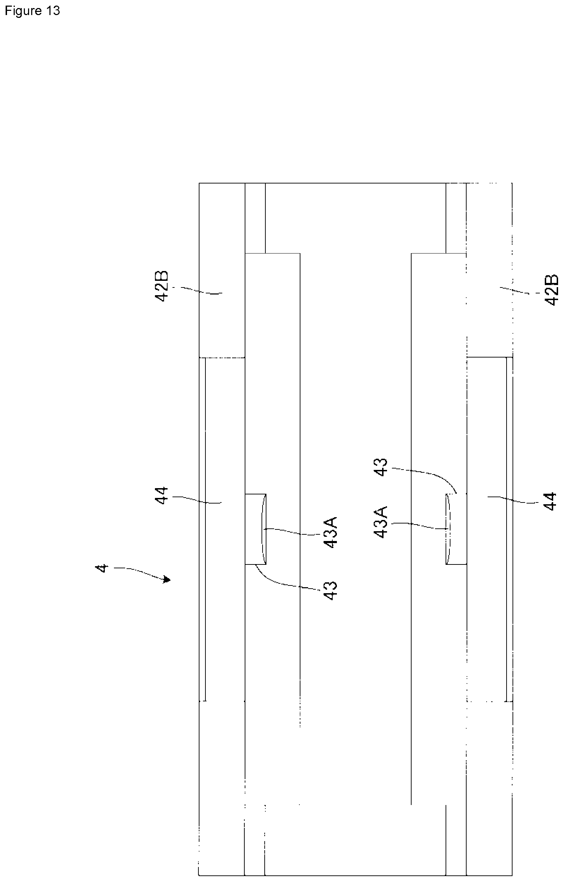

As shown in Fig. 9 to Fig. 14, the clip member 4 is a U-shaped cross-sectional member that consists of a top wall 41 and side walls 42 on both sides, and has a shape with a size so as to fit exactly with the clip mounting section 28 of the arm main body 23. Moreover, the clip member 4 has flexibility to a certain extent, and each of the side walls 42 of the clip member 4 can be deflected toward the side wall 42 on the opposite side. Note that, in the present embodiment, the clip member 4 is formed by a resin mold.

The connection protrusions 43 respectively project at inward-facing surfaces 42A of the side walls 42 on both sides of the clip member 4. The wiper blade 3 is connected to the wiper arm 2 via the clip member 4, by having these connection protrusions 43 fitted into the connection recesses 35 of the wiper blade 3, and the wiper blade 3 is rotatably supported around the connection protrusions 43 with respect to the wiper arm 2.

Note that, a downward inclined part 43A is formed at the top part of each of the connection protrusions 43. In this way, at the time when the wiper blade 3 is mounted on the clip member 4, the connection protrusions 43 can be introduced into the introduction grooves 36 from the inclined parts 43A, and can be smoothly fitted toward the connection recesses 35.

Cutout parts 44 are formed on lower edges 42B of both of the side walls 42 of the clip member 4. At the time when the clip member 4 is mounted on the wiper arm 2, the clip member 4 will be retained within the clip mounting section 28 of the arm main body 23, by having the retention sections 29 of the arm main body 23 fitted into the cutout parts 44.

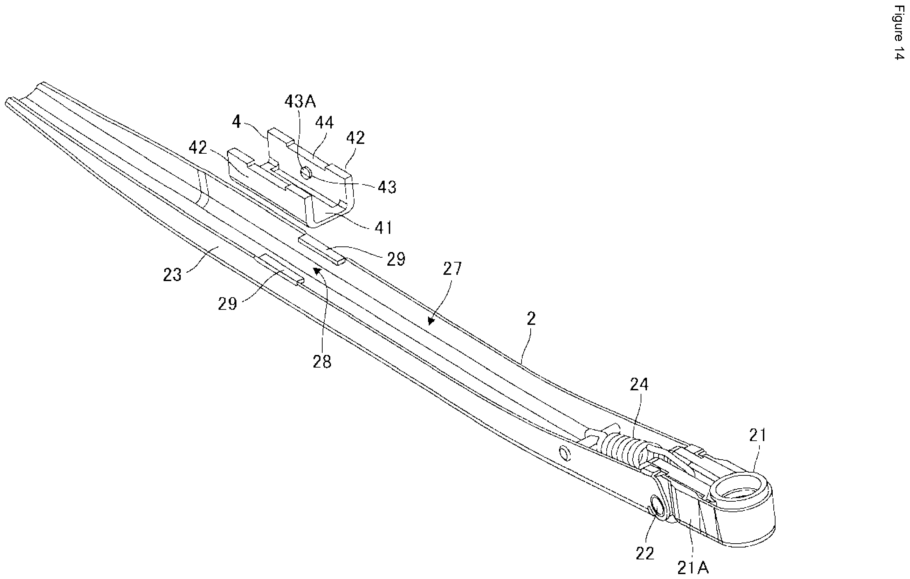

Figure 14 to Figure 16 show a mounting technique for attaching the clip member 4 within the clip mounting section 28 of the arm main body 23. In the mounting of the clip member 4, such as shown in Figure 14, the clip member 4 is inserted within the blade housing section 27 of the arm main body 23, from the top wall 41 side.

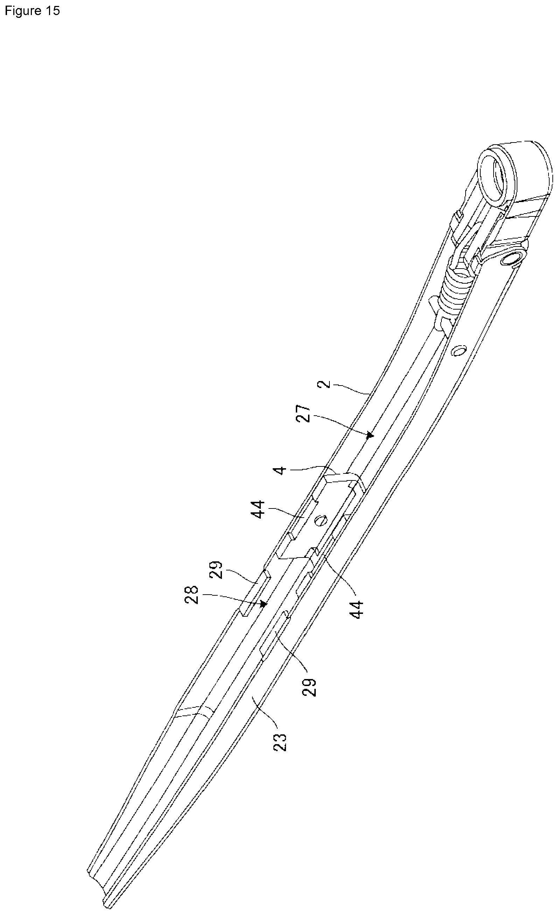

In this case, such as shown in Figure 15, the insertion position of the clip member 4 is not the clip mounting section 28, but is an adjacent position in the long direction with respect to the clip mounting section 28. In this way, the clip member 4 will not interfere with the retention sections 29 of the arm main body 23, at the time of the insertion work.

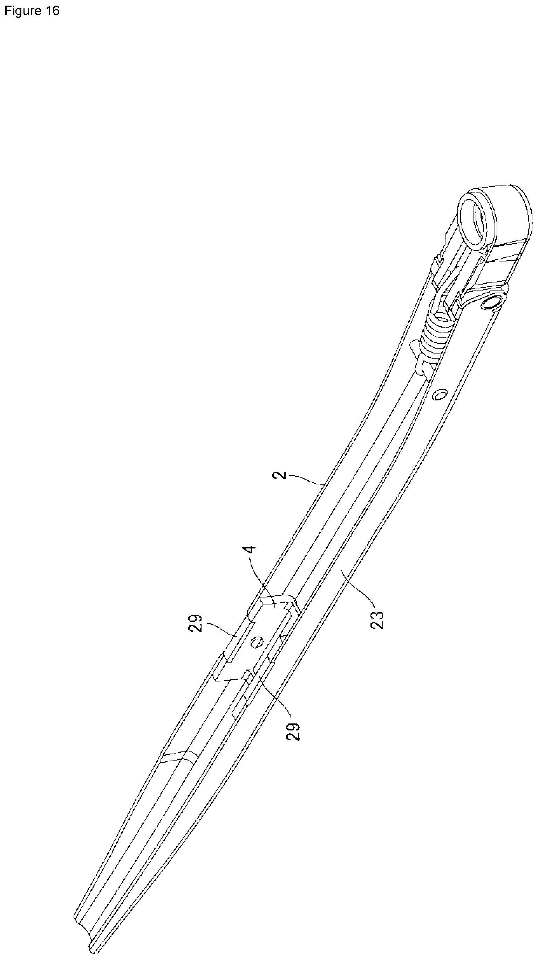

To continue, as shown in Figure 16, the clip member 4 is made to slide toward the clip mounting section 28. In this case, by making both of the side walls 42 of the clip member 4 deflect to the inside, the clip member 4 can be moved within the clip mounting section 28, by passing through the retention sections 29 provided on the clip mounting section 28. In this way, when the clip member 4 is arranged within the clip mounting section 28, the retention sections 29 will be fitted within the cutout parts 44 of the clip member 4, by returning the deflected shapes of both of the side walls 42 of the clip member 4 to the original shapes. In this way, the clip member 4 is appropriately retained within the clip mounting section 28, by the retention sections 29.

According to the wiper assembly 1 of the present embodiment, such as described above, the clip member 4 connects the wiper blade 3 and the wiper arm 2 in a state where the clip member 4 is completely housed within the blade housing section 27 (clip mounting section 28) of the wiper arm 2. Therefore, a part of the clip member 4 is not exposed on the outside surface of the wiper arm 2, and the aesthetics of the wiper assembly 1 can be improved.

Moreover, the clip member 4 is retained, by providing the retention sections 29 on the side walls 26 of the wiper arm, and having the retention sections 29 fitted into the cutout parts 44 of the clip member 4. Therefore, mounting of the clip member 4 to the wiper arm 2 can be performed, by simply fitting the clip member 4 into the clip mounting section 28 of the wiper arm 2. Therefore, the work of mounting the clip member 4 to the wiper arm 2 can be easily performed.

Moreover, both of the side walls 42 of the clip member 4 can be deflected. Therefore, by making both of the side walls 42 deflect to the inside, at the time when mounting the clip member 4 to the wiper arm 2, the clip member 4 can be mounted on the clip mounting section 28 of the wiper arm 2, without interfering with the retention sections 29 that extend to the inside from the lower edges 26A of both of the side walls 26 of the wiper arm 2.

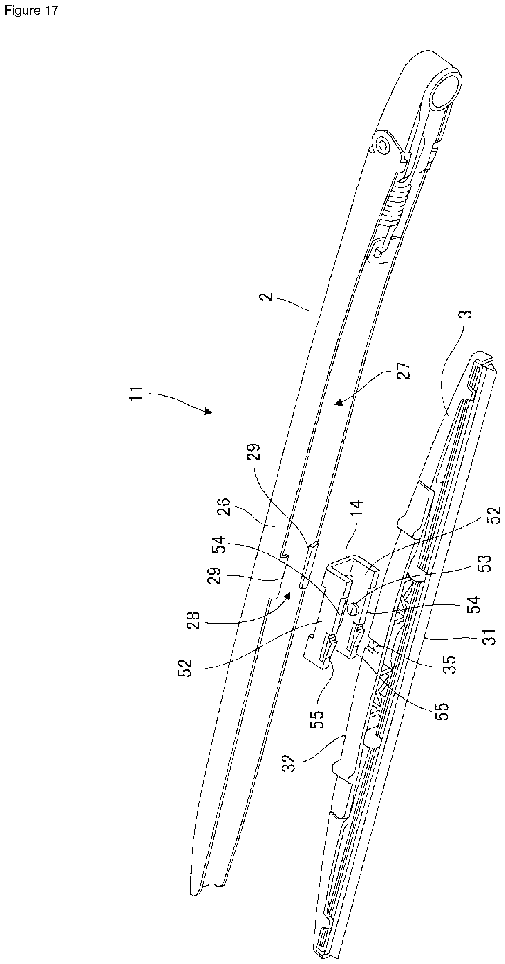

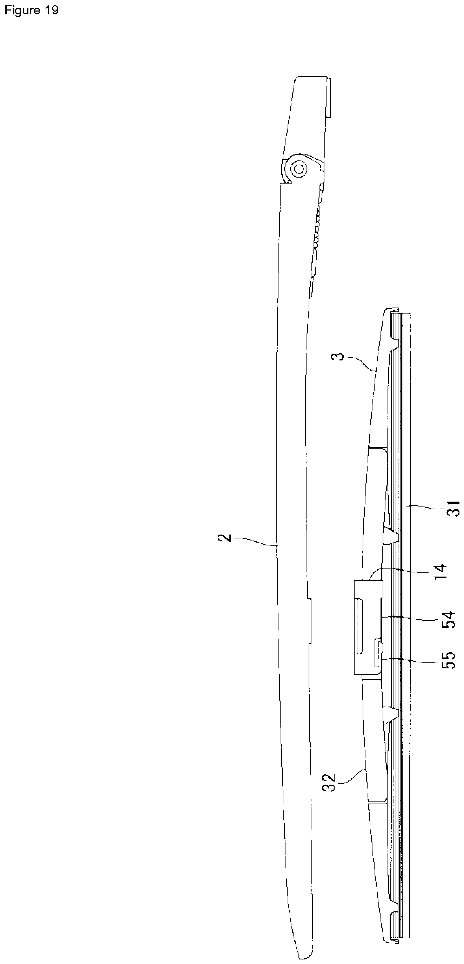

Figure 17 to Figure 19 show an entire configuration of a wiper assembly 11 of a second embodiment of the present invention. As illustrated, the wiper assembly 11 includes a wiper arm 2, a wiper blade 3, and a clip member 14. In the present embodiment, the configurations of the wiper arm 2 and the wiper blade 3 are the same as in the above described first embodiment. Therefore, each part of the wiper arm 2 and the wiper blade 3 will be represented by numerals the same as in the above described first embodiment, and a description of them will be omitted.

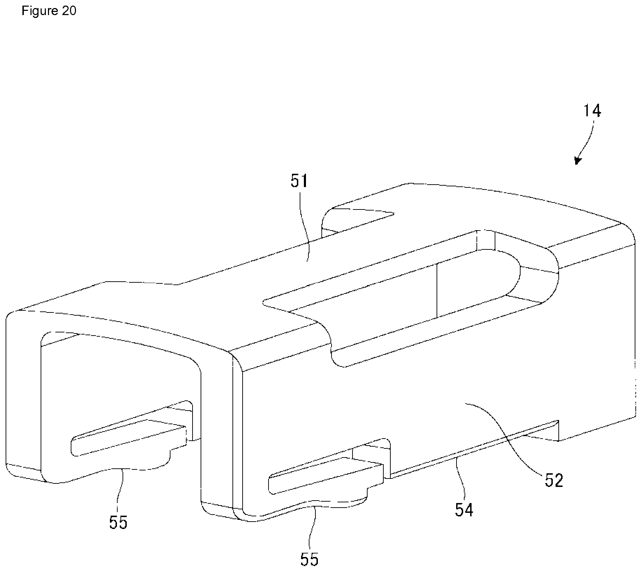

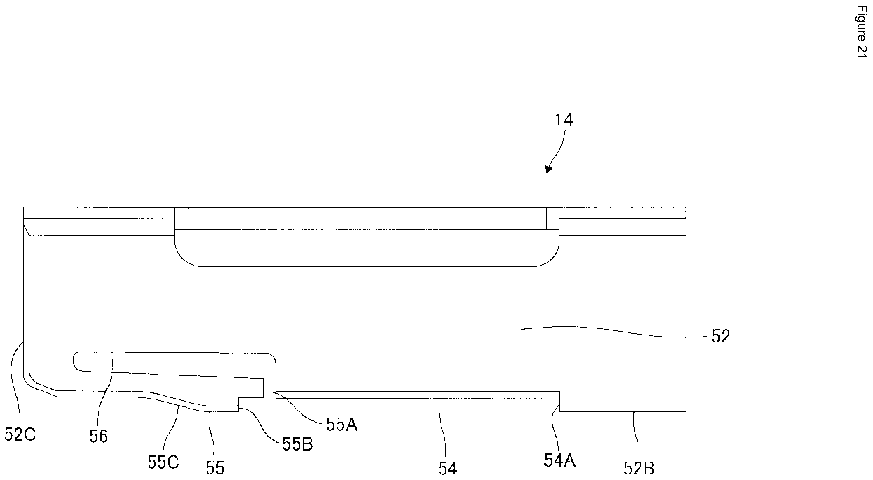

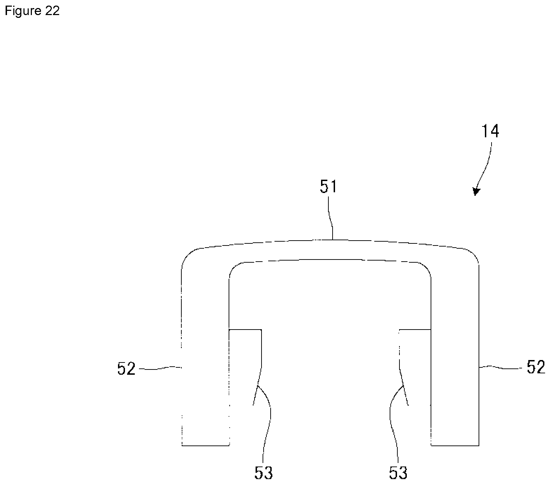

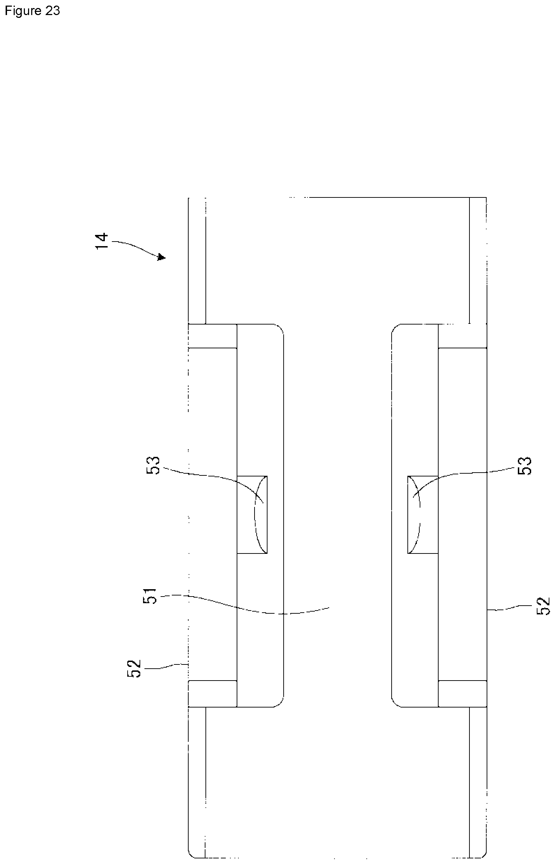

As shown in Figure 20 to Figure 23, the clip member 14 is a U-shaped cross-sectional member that consists of a top wall 51 and side walls 52 on both sides, similar to the clip member 4 of the above described first embodiment, and is formed by a resin mold to have a shape with a size so as to fit exactly with the clip mounting section 28 of the arm main body 23. Moreover, connection protrusions 53 respectively project at inward-facing surfaces 52A of the side walls 52 on both sides of the clip member 14, and the points where the wiper blade 3 is rotatably supported around the connection protrusions 53 with respect to the wiper arm 2 via the clip member 14, by having these connection protrusions 53 fitted into the connection recesses 35 of the wiper blade 3, are the same as in the clip member 4 of the above described first embodiment. In addition, cutout parts 54 are formed on lower edges 52B of both of the side walls 52 of the clip member 14, and the points where the clip member 14 is retained within the clip mounting section 28 of the arm main body 23, by having the retention sections 29 of the arm main body 23 fitted into the cutout parts 54, at the time when the clip member 14 is mounted on the wiper arm 2, are the same as in the clip member 4 of the above described first embodiment.

The clip member 14 of the present embodiment has arm parts 55 provided adjacent to the cutout parts 54. In more detail, recesses 56 cut out more deeply above the cutout parts 54 are formed on the lower edges 52B of each of the side walls 52 of the clip member 14, so as to be adjacent to the front end side of the cutout parts 54. The arm parts 55 extend from front end parts 52C of the side walls 52, so as to be arranged below the recesses 56, and extend parallel to the lower edges 52B, toward the cutout parts 54. Tip parts 55A of the arm parts 55 are free end parts arranged adjacent to the cutout parts 54, and each of the arm parts 55 can be deflected toward the recess 56 side.

The tip parts 55A of the arm parts 55 each have a lower side that is cut out, so that a step part 55B facing the cutout part 54 side is formed. In this way, at the time when the clip member 14 is mounted on the wiper arm 2, the front ends and rear ends of the long direction of the retention sections 29 will be respectively engaged with the step parts 55B and rear end parts 54A of the cutout parts 54. The retention sections 29 are retained within the cutout parts 54, by being sandwiched between the step parts 55B and the rear end parts 54A of the cutout parts 54.

Inclined parts 55C facing the base end side (opposite side to the cutout part 54) are formed at approximate centers of the lower edges of the arm parts 55. As will be described below, at the time when the clip member 14 is mounted on the wiper arm 2, the retention sections 29 of the wiper arm 2 will press the arm parts 55 upward (within the recesses 56), by coming into contact with the inclined parts 55C of the arm parts 55, and the retention sections 29 will be smoothly introduced within the cutout parts 54, by having the retention sections 29 pass through the lower sides of the arm parts 55.

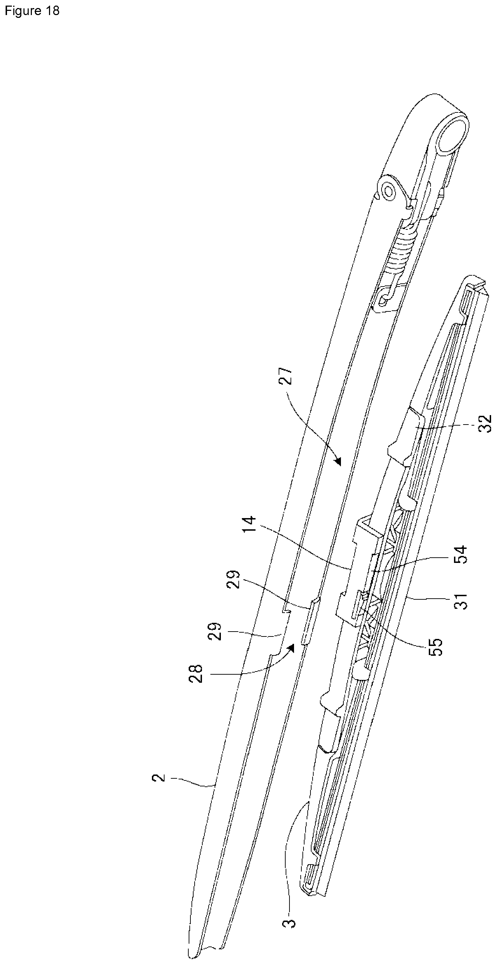

Next, the work of assembling the wiper assembly 11 that uses the clip member 14 of the present embodiment will be described. In the assembly, firstly, the clip member 14 is mounted on the wiper blade 3 as shown in Figure 18. Since this mounting work is simply fitting the connection protrusions 53 of the clip member 14 into the connection recesses 35 of the wiper blade 3, it can be performed very easily.

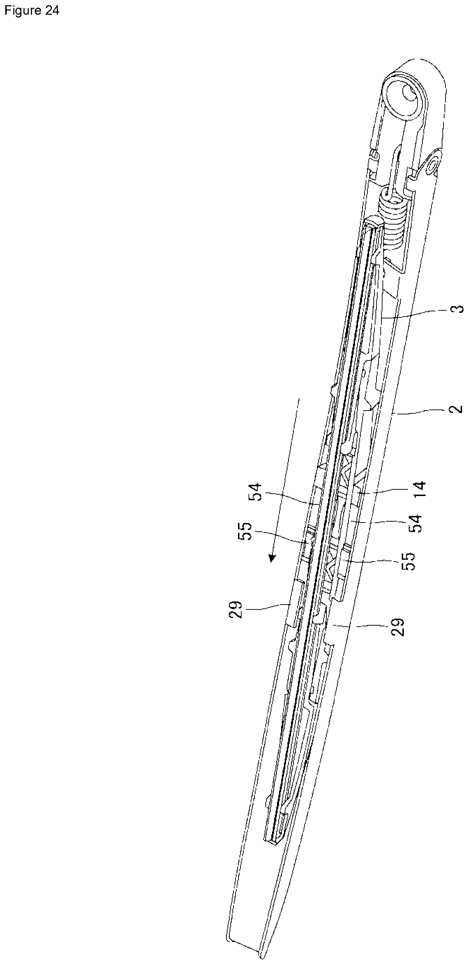

Next, as shown in Figure 24, the wiper blade 3 in a state where the clip member 14 has been mounted is inserted within the blade housing section 27 of the wiper arm 2, so that the clip member 14 is arranged at a position adjacent to the clip mounting section 28 of the wiper arm 2. In this case, the arm part 55 sides (front end sides) of the clip member 14 will be arranged on the clip mounting section 28 side.

To continue, the wiper blade 3 is made to slide in the long direction of the wiper arm 2, so that the clip member 14 moves toward the clip mounting section 28 of the wiper arm 2. In this way, when the arm parts 55 of the clip member 14 come into contact with the retention sections 29 of the wiper arm 2, the arm parts 55 will be pressed up by the retention sections 29. Therefore, the clip member 14 can slide to the clip mounting section 28 side, by smoothly overcoming the retention sections 29.

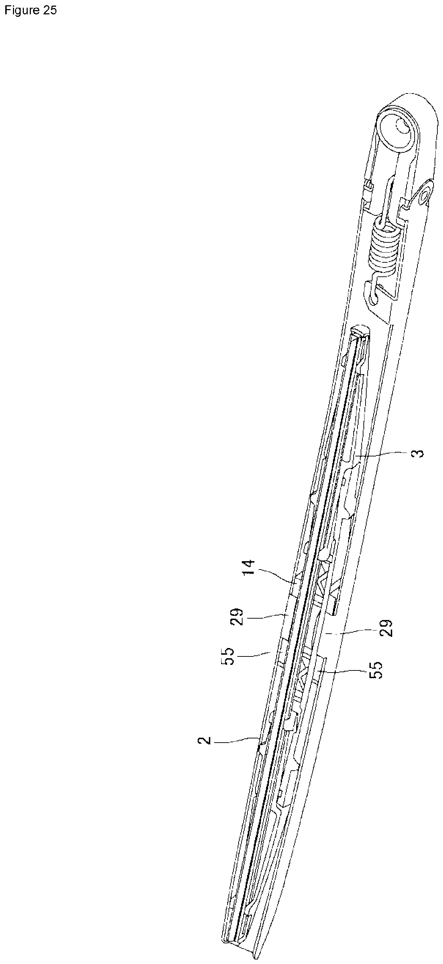

In this way, when the clip member 14 reaches the clip mounting section 28 of the wiper arm 2, as shown in Figure 25, the retention sections 29 of the wiper arm 2 will fit into the cutout parts 54 of the clip member 14, and the attachment of the wiper blade 3 and the connecting member 14 to the wiper arm 2 will be completed.

According to the clip member 14 of the present embodiment, such as described above, the wiper blade 3 can be very easily connected to the wiper arm 2, by simply making the wiper blade 3 slide within the blade housing section 27 of the wiper arm 2, in a state where the clip member 14 is mounted on the wiper blade 3. Therefore, the work of assembling the wiper assembly 11 can be made more efficient. Moreover, the clip member 14 of the present embodiment can join the wiper blade 3 and the wiper arm 2, in a state where the clip member 14 is completely housed inside the wiper arm 2, similar to the clip member 4 of the above described first embodiment. Therefore, the appearance of the wiper arm 2 will not be spoiled, and the aesthetics of the wiper assembly 11 will be improved.

### [List of Reference Numerals]

- 1: wiper assembly
- 2: wiper arm
- 3: wiper blade
- 4: clip member
- 11: wiper assembly
- 14: clip member
- 21: arm head
- 21A: head cover
- 22: connection pin
- 23: arm main body
- 24: spring
- 25: top wall of arm main body
- 26: side wall of arm main body
- 26A: lower edge of side wall
- 26B: inward-facing surface of side wall
- 27: blade housing section
- 28: clip mounting section
- 29: retention section
- 31: blade section
- 32: support section
- 33: claw part
- 34: side surface of support section
- 34A: upper edge of side surface
- 35: connection recess
- 36: introduction groove
- 37: projection
- 41: top wall of clip member
- 42: side wall of clip member
- 42A: inward-facing surface of side wall
- 42B: lower edge of side wall
- 43: connection protrusion
- 43A: inclined part of connection protrusion
- 44: cutout part
- 51: top wall of clip member
- 52: side wall of clip member
- 52A: inward-facing surface of side wall
- 52B: lower edge of side wall
- 52C: front end part of side wall
- 53: connection protrusion
- 54: cutout part
- 54A: rear end part of cutout part
- 55: arm part
- 55A: tip part of arm part
- 55B: step part of arm part
- 55C: inclined part of arm part
- 56: recess

## Claims

1. A wiper assembly comprising:
a wiper blade including a wiping section adapted to wipe a surface to be wiped;
a wiper arm including a blade housing section adapted to house at least a part of the wiper blade; and
a connecting member adapted to connect the wiper blade with the wiper arm in a state where the connecting member is housed within the blade housing section.

2. The wiper assembly according to claim 1,
wherein the wiper arm includes a top wall and side walls on both sides of the top wall,
wherein the blade housing section is formed from the top wall and the side walls, and
wherein each of the side walls includes an edge positioned opposite to the top wall and a retention section adapted to retain the connecting member and disposed at the edge of the side wall.

3. The wiper assembly according to claim 2,
wherein the connecting member includes fitting parts into which the retention sections are to be fitted and deflecting parts disposed adjacent to the fitting parts, and
wherein the retention sections are adapted to be introduced into the fitting parts as the deflecting parts are deflected by contact with the retention sections.

4. A connecting member for a wiper assembly comprising a wiper blade including a wiping section adapted to wipe a surface to be wiped and a wiper arm including a blade housing section adapted to house at least a part of the wiper blade, the connecting member adapted to connect the wiper blade with the wiper arm,
wherein the wiper blade and the wiper arm are connected in a state where the connecting member is housed within the blade housing section.
